(19) Europäisches Patentamt
European Patent Office
Office européen des brevets

(11) Veröffentlichungsnummer : **0 007 531**
**B1**

(12) # EUROPÄISCHE PATENTSCHRIFT

(45) Veröffentlichungstag der Patentschrift : **11.11.81**

(51) Int. Cl.³ : **C 08 F214/06**, C 08 F 2/30

(21) Anmeldenummer : **79102430.0**

(22) Anmeldetag : **13.07.79**

(54) **Carboxylgruppenhaltige Vinylchloridcopolymerisate und ihre Verwendung.**

(30) Priorität : **20.07.78 DE 2831942**

(43) Veröffentlichungstag der Anmeldung : **06.02.80 (Patentblatt 80/03)**

(45) Bekanntmachung des Hinweises auf die Patenterteilung : **11.11.81 Patentblatt 81/45**

(84) Benannte Vertragsstaaten : **BE DE FR GB NL**

(56) Entgegenhaltungen :
**DE - A - 2 304 663**
**FR - A - 2 224 496**
**US - A - 2 616 886**
**US - A - 2 849 424**

(73) Patentinhaber : **BASF Aktiengesellschaft**
**Carl-Bosch-Strasse 38**
**D-6700 Ludwigshafen (DE)**

(72) Erfinder : **Pfitzner, Klaus, Dr.-Chem.**
**Liebermannstrasse 6**
**D-6700 Ludwigshafen (DE)**
Erfinder : **Neubert, Gerhard, Dr.-Chem.**
**Panoramastrasse 11**
**D-6719 Battenberg (DE)**
Erfinder : **Hasselmeyer, Guenter, Dr.-Chem.**
**Georg-Buechner-Strasse 22**
**D-6700 Ludwigshafen (DE)**

**EP 0 007 531 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 17, rue du Louvre, 75001 Paris, France

# Carboxylgruppenhaltige Vinylchloridcopolymerisate und ihre Verwendung

Die vorliegende Erfindung betrifft carboxylgruppenhaltige Vinylchloridcopolymerisate, die Vinylchlorid, Diester α, β-olefinisch ungesättigter Dicarbonsäuren mit Monoalkanolen und α, β-olefinisch ungesättigte Carbonsäuren oder Dicarbonsäurehalbester einpolymerisiert enthalten, und deren Verwendung als Bindemittel für physikalisch aus organischer Lösung auftrocknende Beschichtungsstoffe, insbesondere zur Beschichtung von Metallen, mineralischen Werkstoffen, Kunststoffen und faserhaltigen Werkstoffen.

An derartige Bindemittel werden eine Reihe schwer zu erfüllender, oft widersprüchlicher Eigenschaftsanforderungen gestellt. Sie sollen nach dem Auftrocknen aus Lösung dem Beschichtungsstoff möglichst gute mechanische Eigenschaften, wie z.B. hohe Filmhärte, hohe Kohäsion und gute Flexibilität sowie sehr gute Haftfestigkeit auf den verschiedensten Substraten verleihen. Außerdem sollen sie erst bei möglichst hohen Temperaturen erweichen und bis zu möglichst tiefen Temperaturen flexibel bleiben. Auf der anderen Seite aber soll zu ihrer Verarbeitung als Beschichtungsstoff möglichst wenig Lösungsmittel eingesetzt werden, um Kosten zu sparen und die Umweltbelastung durch flüchtige Lösungsmittel so gering wie möglich zu halten. Die mechanischen Eigenschaften der Copolymerisate hängen aber von ihrem Molekulargewicht ab. Zur Verringerung des Lösungsmittelbedarfs kann das Molekulargewicht daher nicht beliebig gesenkt werden. Das Bindemittel würde sonst su spröde.

Anzustreben ist weiterhin, daß zur Herstellung der Lösungen zu einem möglichst hohen Anteil preisgünstige Kohlenwasserstoffe als Lösungsmittel mitverwendet werden können. Im Widerspruch hierzu steht aber, daß die aus Lösung aufgetrockneten Beschichtungsstoffe von Mineralölen und pflanzlichen und tierischen Fetten möglichst wenig angequollen werden dürfen.

Die Bindemittel sollen weiterhin bei längerer Wassereinwirkung möglichst wenig anquellen, ihre Haftfestigkeit zum Untergrund beibehalten, sich nicht verfärben und nicht trübe werden. Anstriche daraus sollen im Wetter möglichst lange ihren Glanz halten, nicht kreiden und nicht vergilben.

Bei Wärmeeinwirkung sollen möglichst lange keine Verfärbungen auftreten.

Schließlich sollen sich die Bindemittel schon bei Raumtemperatur in möglichst kurzer Zeit rückstandsfrei zu homogenen, gel- und quellkörperfreien Lösungen auflösen lassen.

Als Carboxylgruppen enthalten Copolymerisate aus Vinylchlorid und damit copolymerisierbaren Comonomeren sind verschiedenartig zusammengesetzte bekannt.

Carboxylgruppenhaltige Copolymerisate des Vinylchlorids mit Vinylestern wie z.B. Vinylacetat oder Vinylpropionat ergeben bei K-Werten über 40 zwar Beschichtungen mit guten mechanischen Eigenschaften. Ihre Vergilbungsbeständigkeit in der Wärme, ihre Beständigkeit im Wetter sowie ihre Löslichkeit in Kohlenwasserstoffreichen Lösungsmittelgemischen ist jedoch insbesondere bei Verwendung von Vinylpropionat als Comonomer und Herstellung durch Emulsionspolymerisation mangelhaft.

Carboxylgruppenhaltige Copolymerisate des Vinylchlorids mit Acrylsäureestern zeigen ähnliche Mängel. Sie sind in der Wärme verhältnismäßig kurze Zeit beständig gegen Vergilbung und ergeben nach Herstellung durch Emulsions- oder Suspensionspolymerisation nur verhältnismäßig unvollständig oder inhomogen lösliche, molekularuneinheitliche Produkte.

Carboxylgruppenhaltige Copolymerisate des Vinylchlorids mit Diestern von olefinisch ungesättigten Dicarbonsäuren mit Monoalkoholen gehören nach der DE-PS 1 013 427 ebenfalls zum Stand der Technik. Die in dieser DE-PS beschriebenen Lackharze haben jedoch eine beschränkte. Verträglichkeit mit Alkydharzen und ungenügende Löslichkeitseigenschaften. Diese Nachteile werden aufgehoben, wenn man nach der Lehre der DE-OS 2 304 663 als Diester von Malein- und/oder Fumarsäure solche mit mehrfach verzweigter Alkoholkomponente einer Kettenlänge von 9-15 C-Atomen einsetzt und als Verfahren die Emulsionspolymerisation wählt. Diese erfordert jedoch einen aufwendigen Verfahrensschritt, nämlich die Voremulgierung des Comonomeren mittels einer speziellen Emulgiervorrichtung. Die genannten Eigenschaftsverbesserungen beschränken sich jedoch auf Copolymere mit einem max. K-Wert von 38, was der Erfahrung entspricht, daß technisch brauchbare Lackharze der genannten Zusammensetzung bisher nur mit K-Werten bis maximal 40 bekannt sind.

Die Haftfestigkeit von solchen Copolymeren auf Metallen ist jedoch für bestimmte Anwendungen ungenügend und die mechanischen Eigenschaften, wie vor allem die Dehnbarkeit der Lackfilme, reicht für viele Anwendungen nicht aus.

Carboxylgruppenhaltige Copolymerisate aus Vinylchlorid und damit copolymerisierbaren Comonomeren können nach verschieden üblichen Polymerisationsverfahren hergestellt werden, beispielsweise durch Lösungs-, Suspensions- oder Emulsionspolymerisation.

Die Lösungspolymerisation hat dadurch Nachteile, daß auf diesem Wege aus VC-Copolymerisaten mit einem K-Wert von 40 bis 60 nur sehr bindemittelarme Lösungen zu Produkten in fester Lieferform sehr aufwendig ist.

Bei der Anwendung der Suspensionspolymerisation für die Herstellung derartiger Copolymerisate ist nachteilig, daß sich die hierbei erhaltenen Copolymerisate nicht bereits bei Raumtemperatur vollständig gel- und quellkörperfrei in Lösung bringen lassen und der Einbau der Comonomeren, insbesondere der ungesättigten Carbonsäuren sehr unvollständig ist und die Copolymerisate daher sehr molekularuneinheitlich sind.

Die Herstellung von VC-Copolymerisaten durch Emulsionspolymerisation, z.B. gemäß der DE-PS 942 352, führt zu Produkten mit beeinträchtigter Löslichkeit in den üblichen Lacklösungsmitteln und vor allem zu einer stark verminderten Haftfestigkeit der mit diesen Bindemitteln hergestellten Beschichtungsstoffe auf Metallen und anderen Werkstoffen, da die zur Polymerisation verwendeten Hilfsstoffe, wie vor allen der Emulgator, bei den großtechnisch angewandten Aufarbeitungsmethoden nicht vollständig entfernt werden.

Der vorliegenden Erfindung lag nun die Aufgabe zugrunde, Carboxylgruppen enthaltende Vinylchloridcopolymerisate aufzuzeigen, die sich als Bindemittel für physikalisch aus organischer Lösung auftrocknende Beschichtungsstoffe, insbesondere zur Beschichtung von Metallen, mineralischen und faserhaltigen Werkstoffen und Kunststoffen eignen, dabei die oben erwähnten zum Teil widersprüchlichen Eigenschaftsmerkmale in optimaler Weise in sich vereinen und die durch die üblichen Herstellverfahren bedingten Nachteile vermeiden.

Gegenstand der vorliegenden Erfindung sind carboxylgruppenhaltige Vinylchloridcopolymerisate, die Vinylchlorid, Diester α, β-olefinisch ungesättigter Dicarbonsäuren mit Monoalkanolen und α, β-olefinisch ungesättigte Carbonsäuren oder Dicarbonsäurehalbester einpolymerisiert enthalten, wobei die Copolymerisate

a) 65 bis 85 Gewichtsprozent Vinylchlorid,

b) 15 bis 35 Gewichtsprozent mindestens eines Diesters einer α, β-olefinisch ungesättigten Dicarbonsäure mit 1 bis 10 Kohlenstoffatome enthaltenden Monoalkanolen und

c) 0,3 bis 10 Gewichtsprozent mindestens einer copolymerisierbaren α, β-olefinisch ungesättigten Carbonsäure oder eines Halbesters einer α, β-olefinisch ungesättigten Dicarbonsäure mit 1 bis 18 Kohlenstoffatome enthaltenden Monoalkanolen,

mit der Maßgabe, daß die Summe der unter a) bis c) genannten Prozentzahlen gleich 100 ist, einpolymerisiert enthalten und die Copolymerisate Säurezahlen zwischen 3 und 30 sowie K-Werte zwischen 40 und 60 aufweisen, die dadurch gekennzeichnet sind, daß die Copolymerisate durch Emulsionspolymerisation in Gegenwart nichtionischer Emulgatoren und anschließende übliche Aufarbeitung durch Fällung und Trocknung erhalten worden sind.

Gegenstand der vorliegenden Erfindung ist ferner die Verwendung dieser carboxylgruppenhaltigen Vinylchloridcopolymerisate als Bindemittel für physikalisch aus organischer Lösung auftrockende Beschichtungsstoffe.

Mit den erfindungsgemäßen carboxylgruppenhaltigen Vinylchloridcopolymerisaten lassen sich Beschichtungsstoffe mit besonders guten mechanischen Eigenschaften, wie z.B. hoher Filmhärte, hoher Kohäsion, guter Flexibilität, guter Block- und Wärmedruckfestigkeit sowie besonders guter Adhäsion zu den verschiedensten Substraten wie insbesondere Metallen herstellen. Darüber hinaus zeichnen sich die damit hergestellten Beschichtungen durch sehr gute Vergilbungsbeständigkeit bei langzeitiger Beanspruchung im Wetter oder in der Wärme sowie ausgezeichnete Fett- und Mineralölbeständigkeit aus und gewährleisten gleichzeitig einen hervorragenden Schutz für das Substrat gegen Korrosion. Ihre gute Pigmentbenetzung ermöglicht die Herstellung hochglänzender Deckbeschichtungen.

Die erfindungsgemäßen Copolymerisate lassen sich verhältnismäßig konzentriert in Lösungsmittelgemischen wie z.B. Estern und/oder Ketonen lösen, die auch hohe Anteile an preiswerten Kohlenwasserstoffen als Verschnittmittel enthalten können, ohne daß auf eine gute Beständigkeit gegen Mineralöle und pflanzliche und tierische Fette verzichtet werden muß. Die erfindungsgemäßen Copolymerisate sind außerdem sehr molekulareinheitlich.

Zu den Aufbaukomponenten des erfindungsgemäß als Bindemittel zu verwendenden Copolymerisats ist folgendes auszuführen :

a) Komponente a), Vinylchlorid ist im Copolymerisat in einer Menge von 65 bis 85, vorzugsweise 70 bis 80, Gewichtsprozent enthalten.

b) Als Komponente b) kommen Diester der Maleinsäure und Fumarsäure mit 1 bis 10 Kohlenstoffatome enthaltenden Monoalkoholen in Frage, wie z.B. Maleinsäure- oder Fumarsäure-dimethyl-, -äthyl-, -propyl-, -n-butyl, -hexyl-, -octyl-, -iso-decyl-ester und deren Mischungen. Besonders bevorzugt sind Maleinsäure-di-n-butyl- und insbesondere Maleinsäure-di-iso-butyl-ester.

Komponente b) ist im Copolymerisat in einer Menge von 15 bis 35, vorzugsweise 20 bis 30, Gewichtsprozent einpolymerisiert.

c) Als Komponente c) kommen α, β-olefinisch ungesättigte Carbonsäuren, wie Mono- und Dicarbonsäuren mit 3 bis 5 Kohlenstoffatomen, z.B. Acrylsäure, Methacrylsäure, Crotonsäure, Maleinsäure, Fumarsäure und Itaconsäure sowie Dicarbonsäuremonoester in Frage, wie die Halb-ester von Maleinsäure und Fumarsäure mit 1 bis 18 Kohlenstoffatome enthaltenden Monoalkanolen, wie z.B. Malein- oder Fumarsäuremonomethyl-, -äthyl-, -propyl-, -n-butyl-, -iso-butyl-, -hexyl-, -octyl-, -n-decyl-, -iso-decyl-, -lauryl-, -stearyl- und -äthylhexylester. Desgleichen eignen sich Gemische aus den genannten ungesättigten Carbonsäure und Dicarbonsäuremonoestern.

Komponente c) ist im Copolymerisat in einer Menge von 0,3 bis 10 Gewichtsprozent einpolymerisiert. Die Säurezahl des Copolymerisats liegt erfindungsgemäß zwischen 3 und 30, vorzugsweise zwischen 9 und 25.

Der K-Wert (nach Fikentscher) der erfindungsgemäßen Bindemittel beträgt 40 bis 60, bevorzugt 43 bis 50 (gemessen 1 %ig in Tetrahydrofuran (= THF).

Beispiele für bevorzugt als Bindemittel geeignete Copolymerisate sind Polymerisate aus 70 bis 80 Gewichtsprozent Vinylchlorid, 20 bis 29 Gewichtsprozent Maleinsäuredibutyl- oder insbesonders -di-isobutylester und 3 bis 8 Gewichtsprozent Maleinsäure-mono-n-butyl- oder -mono-i-butylester oder vorzugsweise 1,5 bis 4 Gewichtsprozent Acrylsäure mit einer Säurezahl zwischen 9 und 25.

Die Herstellung der erfindungsgemäßen Copolymerisate erfolgt durch Emulsionspolymerisation. Dazu werden überwiegend nichtionische Emulgatoren eingesetzt. Diese sind Addukte von Äthylen- und/oder Propylenoxid an Fettalkohole, Alkylphenole, Fettamine, Fettsäuren oder Fettsäureamide. Bevorzugt sind solche erfindungsgemäßen Copolymerisate, zu deren Herstellung Alkylphenolpolyalkylenoxidäther der allgemeinen Formel

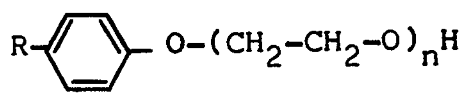

eingesetzt werden, wobei R ein Alkylrest mit 6-18 C-Atomen und n = 5-50, insbesondere = 20-30, ist. Die Emulgatoren kommen in Mengen von 0,1 bis 10 %, vorzugsweise 1 bis 5 %, bezogen auf die Gesamtmenge der Monomeren a) bis c) zum Einsatz.

Die Emulsionspolymerisation erfolgt im allgemeinen bei Temperaturen von 40 bis 80 °C, vorzugsweise 50 bis 70 °C, unter Verwendung der üblichen peroxidischen Initiatoren, wie beispielsweise Ammoniumpersulfat, Kaliumpersulfat oder Wasserstoffperoxid.

Als Fahrweise wird die halbkontinuierliche Polymerisation bevorzugt, d.h. man legt die wäßrige Phase, enthaltend den Emulgator, den Initiator und gegebenenfalls andere Hilfsstoffe, wie z.B. Puffersalze ganz oder teilweise vor, fügt einen Teil der Monomerenmischung, die Vinylchlorid, den oder die Maleinsäureester und gegebenenfalls die Säurekomponente enthält, hinzu, bringt den Ansatz auf Polymerisationstemperatur, führt die restliche Monomerenmischung, bestehend aus Vinylchlorid, Maleinsäureester und Säurekomponente, gegebenenfalls synchron mit dem restlichen Teil der wäßrigen Phase nach Maßgabe der Polymerisationsgeschwindigkeit kontinuierlich oder portionsweise zu und polymerisiert bis zu einem bestimmten Enddruck oder bis zur konstanten Dichte der Dispersion aus. Die Monomeren können auch getrennt, d.h. Vinylchlorid und die Comonomeren jeweils für sich allein, dosiert werden. Der Beginn der Zuläufe erfolgt sofort nach Erreichen der Polymerisationstemperatur oder auch mit einer gewissen Verzögerung erst nach Erreichen eines Umsatzes von bis zu 20 % in der Vorlage. Auf diese Weise erhält man ein sehr einheitlich copolymerisiertes Produkt.

Die Aufarbeitung der Dispersion zum Festprodukt erfolgt durch Fällung. In der Literatur (s. Houben-Weyl, 4. Aufl. Band XIV/1 S. 470 bis 493) sind eine Reihe von Methoden beschrieben, nach denen Polymerdispersionen ausgefällt und die entsprechenden Polymerisate als Festprodukt isoliert werden können.

Es wurde gefunden, daß bei Verwendung der erfindungsgemäßen nichtionischen Emulgatoren unter den bekannten Methoden vorzugsweise die Fällung mit Alkoholen zu quantitativ isolierbaren, körnigen Festprodukten führt. Als Alkohole kommen die 1 bis 8 Kohlenstoffatome enthaltenden Alkohole in Frage, bevorzugt wird n-Butanol eingesetzt. Diese Methode erweist sich außerdem als besonders vorteilhaft hinsichtlich des Restgehalts an Vinylchloridmonomerem im isolierten Festprodukt. Es werden Werte erreicht, die noch beträchtlich unter dem in den EG-Richtlinien geforderten Wert von 1 ppm liegen.

Die Ausfällung der Dispersion erfolgt vorzugsweise durch Zugabe derselben zu einem Wasser-Alkoholgemisch. Es kann aber auch umgekehrt verfahren werden. Die Mengenverhältnisse Wasser : Alkohol : Dispersion liegen üblicherweise in den Grenzen 0 : 1 : 2 und 3 : 1 : 1. Durch Aufheizen des Gemischs auf bis zu 100 °C wird die Ausfällung gesintert und damit in ein isolierbares körniges Produkt überführt und gleichzeitig der Alkohol nebst den Restmonomeren abdestilliert. Der Alkohol kann so für den nächsten Fällvorgang zurückgewonnen werden.

Die erfindungsgemäßen Copolymerisate eignen sich als Bindemittel für physikalisch aus organischer Lösung auftrocknende Beschichtungsstoffe zur Beschichtung von Metallen, Kunststoffen sowie faserhaltigen und mineralischen Werkstoffen. Sie können sowohl zur Herstellung von Klarlackbeschichtungen wie auch für pigmentierte Anstrichstoffe eingesetzt werden und weisen im allgemeinen Erweichungspunkte (KSN) von über 60 °C auf.

Als Pigmente und Füllstoffe eignen sich die üblicherweise für Carboxylgruppen enthaltende Bindemittel verwendeten Stoffe, wie z.B. Anatas, Rutil, Calzite, Dolomite, Muskovitglimmer, Schwerspat, Kieselgur, Talkum und deren Mischungen.

Die Verarbeitung und Anwendung der erfindungsgemäßen Bindemittel erfolgt in der für physikalisch trocknende Beschichtungsstoffe üblichen Verfahrensweise über die Herstellung einer Lösung in organischen Lösungsmitteln und anschließendes Pigmentieren. Als Lösungsmittel eignen sich beispielsweise Mischungen aus aromatischen Kohlenwasserstoffen, wie z.B. Toluol und Xylol, Estern, wie Äthyl- und Butylacetat und Ketonen, wie Aceton und Methylisobutylketon sowie gegebenenfalls Alkoholen, wie Isopropanol und Butanole.

Die Flexibilität und Dehnbarkeit der erfindungsgemäßen Polymerisatbindemittel kann durch Modifizieren mit einem oder mehreren Weichmachern in weiten Grenzen abgeändert werden. Gleichzeitig läßt

sich dadurch die Erweichungstemperatur der Beschichtungen erniedrigen, beispielsweise um die Siegelbarkeit von Überzügen zu verbessern.

Die erfindungsgemäßen Bindemittel können weiterhin mit vielen anderen Lackrohstoffen kombiniert werden, wie z.B. mit anderen Vinylchloridcopolymerisaten, Poly(meth)acrylaten, Ketonharzen, Alkydharzen, Harnstoff- und Melamin-Formaldehydkondensationsprodukten und flüssigen Epoxidharzen, um Beschichtungen mit abgewandelten Eigenschaften herzustellen oder die Eigenschaften dieser Produkte zu verbessern.

Die folgenden Beispiele sollen den Erfindungsgegenstand erläutern, Vergleichsbeispiele werden aufgeführt. Die in den Beispielen angegebenen Teile und Prozente sind, soweit nicht anders angegeben, Gewichtsteile bzw. Gewichtsprozente.

## Beispiel 1

In einem mit Stickstoff gespülten Rührautoklaven werden 40 Teile Vinylchlorid und 8 Teile Maleinsäuredi-iso-butyl-ester zu einer wäßrigen Lösung aus 350 Teilen Wasser, 0,1 Teilen eines Adduktes von ca. 25 Mol Äthylenoxid pro Mol Octylphenol, 0,4 Teilen Natriumbicarbonat und 0,8 Teilen Ammoniumpersulfat gegeben. Die Mischung wird auf 65 °C aufgeheizt, wobei die Inertgase ausgeschleust werden. Nach Erreichen der Polymerisationstemperatur beträgt der Anfangsdruck 9 bar. Man beginnt sofort mit dem synchronen Zulauf einer Mischung aus 72 Teilen Maleinsäure-di-iso-butylester, 20 Teilen Maleinsäure-mono-n-butylester und 260 Teilen Vinylchlorid und der wäßrigen Lösung aus 140 Teilen Wasser, weiteren 15 Teilen des oben genannten Äthylenoxid-Octylphenoladduktes, 75 Teilen 5 %iger Natronlauge und 0,8 Teilen Kaliumpersulfat. Die Zuläufe werden so dosiert, daß der Druck im Verlaufe der Reaktion gleichmäßig bis auf 7 bar abfällt. Unter den genannten Bedingungen beträgt die Zulaufdauer 12 bis 13 Stunden. Es wird bis zu einer konstanten Dichte der Dispersion auspolymerisiert, wobei der Druck bis auf 1 bar fällt. Es resultiert eine stabile Dispersion mit einem Festgehalt von 38 %. Der pH-Wert beträgt 4. Zur Aufarbeitung auf Festprodukt wird die Dispersion (2 Teile) mit Butanol (1 Teil) bei 55 °C gefällt und das Butanol azeotrop mit Wasser bei ca. 100 °C abdestilliert. Es wird ein feinkörniges, farbloses, gut auswaschbares und trockenfähiges Produkt erhalten. Nach analytischen Daten enthält es 74 % Vinylchlorid, 22,5 % Maleinsäure-di-isobutyl-ester und 3,5 % Maleinsäure-mono-n-butylester einpolymerisiert. Die Säurezahl nach DIN 53 402 beträgt 11, der K-Wert nach Fikentscher (1 %ig in THF) 45.

## Beispiel 2

Es wird wie in Beispiel 1 verfahren. Es werden vorgelegt 1 600 Teile Wasser, 0,4 Teile des in Beispiel 1 genannten Äthylenoxid/Octylphenoladduktes, 1,6 Teile Natriumbicarbonat, 3,2 Teile Ammoniumpersulfat, 80 Teile Maleinsäure-di-isobutylester und 240 Teile Vinylchlorid. Nach dem Aufheizen auf 60 °C erfolgt der synchrone Zulauf einer Mischung aus 890 Teilen Vinylchlorid, 288 Teilen Maleinsäure-di-isobutylester und 32 Teilen Acrylsäure sowie der wäßrigen Lösung aus 700 Teilen Wasser, 40 Teilen des Äthylenoxid/Octylphenol-Adduktes und 80 Teilen Natronlauge 5 %ig.

Nach 13 Stunden Zulauf ist der Druck von 8 bar auf 6 bar abgefallen. Es wird bis zur konstanten Dichte der Dispersion auspolymerisiert, wobei der Druck auf 1 bar abfällt, Es resultiert eine 39 %ige Dispersion mit einem pH-Wert von 3,5. Nach der Aufarbeitung erhält man ein feinkörniges Polymerisat mit einem Vinylchlorid-Gehalt von 73 %, einem Maleinsäure-di-iso-butylestergehalt von 25,7 % und einem Acrylsäuregehalt von 1,3 %, dem K-Wert 47 und der Säurezahl 10.

## Vergleichsbeispiel A

Beispiel 1 wird in der Weise abgeändert, daß in der Vorlage als Emulgator 0,2 Teile des Natriumsalzes einer Paraffinsulfonsäure und im wäßrigen Zulauf 8,8 Teile des Natriumsalzes der Paraffinsulfonsäure eingesetzt werden. Das resultierende Copolymerisat enthält 76 % Vinylchlorid einpolymerisiert. Die Säurezahl beträgt 8, der K-Wert 47.

## Vergleichsbeispiel B

In einem Rührautoklaven mit Impellerrührer und Stromstörer werden 180 Teile Wasser, 3 Teile einer 2 %igen Methylcelluloselösung, 16,5 Teile Maleinsäure-di-n-butylester, 2,4 Teile Maleinsäureanhydrid, 0,9 Teile Diisopropylperoxiddicarbonat (20 %ig), 0,48 Teile Lauroylperoxid und nach Stickstoffspülung und Evakuieren 66 Teile Vinylchlorid vorgelegt. Nach Aufheizen auf 60 °C wird 30 min anpolymerisiert und dann innerhalb von 8 Stunden ein Gemisch aus 24 Teilen Vinylchlorid und 11,5 Teilen Maleinsäuredi-n-butylester zugegeben. Nach einer Gesamtreaktionszeit von 12 Stunden ist der Druck von ursprünglich 8 bar auf 1,5 bar abgefallen. Es resultiert ein Perlpolymerisat mit gleichmäßiger Körnung, das abgesaugt und mit Wasser nachgewaschen wird. Der Vinylgehalt wurde analytisch zu 75 % bestimmt, der K-Wert beträgt 46, die Säurezahl 3.

## Vergleichsbeispiel C

Es wird gearbeitet wie in Beispiel 1. Die Vorlage besteht aus 5 220 Teilen Wasser, 90 Teilen einer 40 %igen Lösung des Na-salzes einer Paraffinsulfonsäure, 18 Teilen Natriumacetat, 75 Teilen Isobutylacrylat und 1 440 Teilen Vinylchlorid. Nach Erreichen der Polymerisationstemperatur von 65 °C werden 720 Teile einer 2 %igen Natriumpersulfatlösung zugegeben. Nach Anpolymerisieren bis zu einem Umsatz von ca. 10 % beginnt man mit dem Zulauf der Monomerenemulsion aus 1 834 Teilen Wasser, 98 Teilen Natriumacetat, 495 Teilen einer 40 %igen Lösung des Na-salzes einer Paraffinsulfonsäure, 1 831 Teilen i-Butylacrylat, 148 Teilen Acrylsäure und 8 100 Teilen Vinylchlorid. Synchron werden 1 360 Teile einer 2 %-Kaliumpersulfat-Lösung zugefahren. Nach 9 Stunden Zulauf ist der Druck von 8,5 auf 6,5 bar abgefallen. Nach weiterer Zugabe von 131 Teilen i-Butyl-acrylat und 11 Teilen Acrylsäure wird bis zu einem Druck von 1,5 bar auspolymerisiert. Es resultiert eine feinteilige ca. 30 %ige Dispersion vom pH-Wert 2.

Nach der Aufarbeitung erhält man ein Festprodukt mit einem Vinylchloridgehalt von 81 % einem K-Wert von 46 und einer Säurezahl von 9.

## Vergleichsbeispiel D

Beispiel C wird in der Weise abgeändert, daß als Comonomeres statt i-Butylacrylat Vinylpropionat eingesetzt wird. Die Monomerenmischung in der Vorlage besteht demnach aus 1 200 Teilen Vinylchlorid und 300 Teilen Vinylpropionat, im Zulauf aus 7 000 Teilen Vinylchlorid, 2 850 Teilen Vinylpropionat und 150 Teilen Acrylsäure. Der Anfangsdruck beträgt bei 70 °C Polymerisationstemperatur 8 bar, der Enddruck 2,5 bar. Nach Fällung der 30 %igen Dispersion resultiert ein Polymerisat mit einem Vinylchloridgehalt von 69 %, einem K-Wert von 43 und einer Säurezahl von 3.

## Vergleichsbeispiel E

Käufliches, durch Lösungspolymerisation hergestelltes Copolymerisat aus 86 % Vinylchlorid, 13 % Vinylacetat und 1 % Maleinsäure mit einem K-Wert von 43.

Die Kennwerte zu den Vinylchloridcopolymerisaten der Beispiele 1 und 2 sowie der Vergleichsbeispiele A bis E sind in den Tabellen 1 bis 3 zusammengestellt.

Daraus geht hervor, daß die erfindungsgemäßen carboxylgruppenhaltigen Vinylchloridpolymerisate sowohl gegenüber den durch Suspensions- bzw. Lösungspolymerisation (Vergleichsbeispiel B bzw. E) bzw. durch Emulsionspolymerisation in Gegenwart ionischer Emulgatoren (Vergleichsbeispiel A) hergestellten, als auch gegenüber entsprechenden Copolymerisaten, die Vinyl- bzw. Acrylester einpolymerisiert enthalten (Vergleichsbeispiel C bzw. D), deutliche Vorteile aufweisen.

Tabelle 1
Kennwerte der Klarlacke

| | Beispiele : | | Vergleichsbeispiele : | | | | |
|---|---|---|---|---|---|---|---|
| | 1 | 2 | A | B | C | D | E |
| K-Wert, nach DIN 53 726, 1 %ig in Tetrahydrofuran: | 45 | 44 | 47 | 46 | 46 | 43 | 43 |
| Säurezahl, nach DIN 53 402, mgKOH/g | 11 | 10 | 8 | 3 | 9 | 3 | 11 |
| Viskosität und Aussehen (1) der Lösungen: | | | | | | | |
| a) 20 %ig in Xylol/MIBK (2) = 1/1, mPa.s: | 200 | 180 | 400 | 100 | 230 | 100 | 400 |
| Aussehen: | 0 | 0 | 0 | 3 | 0 | 3 | 0 |
| b) 25 %ig in Xylol/MIBK = 1/1, mPa.s: | 650 | 600 | 2 200 | 400 | 4 200 | | 2 600 |
| Aussehen: | 0 | 0 | 0 | 4 | 3 | 5 | 2 |
| c) 20 %ig in Xylol/MIBK = 85/15 mPa.s: | 600 | 450 | | 200 | 3 300 | | 2 000 |
| Aussehen: | 0 | 0 | 5 | 5 | 4 | 5 | 4 |
| Verschneidbarkeit von 10 g Lösung a) mit Cyclohexan bis zur Polymerflockung, ml: | 17 | 16 | 16 | | 13 | | 6 |

(1) Aussehen: 0 = fehlerfrei, vollständig bei 23 °C löslich
1 = Lösung enthält Spuren nicht vollständig gelöster Polymeranteile
2 = Lösung enthält geringe Anteile unlöslicher oder gelartig gelöster Bestandteile
3 = Lösung enthält größere Anteile gelartig gelöster Bestandteile
4 = Lösung ist stark gelig und inhomogen
5 = Lösung ist geliert oder Polymer ist zum großen Teil unlöslich

(2) = Methylisobutylketon

Tabelle 2
Kennwerte der Klarlackfilme

| | Beispiele: 1 | 2 | Vergleichsbeispiele: A | B | C | D | E |
|---|---|---|---|---|---|---|---|
| Schälfestigkeit auf Aluminiumfolie (1), N/cm | 1,5 | 2,5 | 0,3 | 1,1 | 0,3 | 0 | 3,5 |
| Hitzestabilität bei 100 °C (2), Stunden | | 6 | 6 | | 1/2 | 1/4 | 3 |
| Reißfestigkeit (3), DIN 53 455 | | | | | | | |
| Reißkraft, $N/mm^2$ | 24 | 32 | 27 | 20 | zu | zu | 25 |
| Reißdehnung, % | 25 | 20 | 20 | 60 | spröde | spröde | 30 |
| Erweichung nach 7 Tagen Lagerung (4) in Leinöl | 0 | 0 | 0 | | | | 0 |
| Mineralöl | 0 | 0 | 0 | | | | 0 |
| Heißwasserbeständigkeit (5) | 2 | 1 | 3 | 1 | 4 | | 1 |

(1) Lösung b) 2 Stunden bei 23 °C und 30 Minuten bei 80 °C getrocknet, bei Trockenschichtdicke von ca. 15 μm 10 Sekunden bei 160 °C und 4 bar Film auf Film gesiegelt
(2) Trockenfilmdicke ca. 0,6 mm aus Lösung b) 7 Tage bei 50 °C vorgetrocknet auf Glas, Dauer bis zum Beginn der Braunverfärbung
(3) Trockenfilmdicke 1,0 mm, 3 Wochen bei 23 °C und 7 Tage bei 50 °C vorgetrocknet
(4) Trockenfilmdicke 0,05 mm, 7 Tage bei 50 °C vorgetrocknet ; 0 = keine meßbare Erweichung
(5) Trockenfilmdicke ca. 0,05 mm auf Glas, 7 Tage bei 50 °C getrocknet, Trübung nach 30 Minuten bei 80 °C Wasserlagerung :
1 = sehr geringe Trübung   3 = starke Trübung
2 = geringe Trübung   4 = weiß angelaufen

Tabelle 3
Kennwerte der pigmentierten (1) Lösungen b)

| | Beispiel Nr. 1 | 2 | Vergleichsbeispiele: C | D | E |
|---|---|---|---|---|---|
| Kurzbewitterung : | | | | | |
| Vergilbung nach 1 Woche Dunkellagerung der 700 Stunden im Xenotestgerät 450 belichteten Proben (2) | 0 | 0 | 0 | 6 | 5 |
| Kreiden nach 700 Stunden Beanspruchung im Xenotestgerät 1 200 (3) | 0 | 0 | 2 | 2 | 2 |

(1) Mit 40 % Rutil berechnet auf Polymer pigmentiert. Trockenfilmdicke 50 μm; 7 Tage bei 23 °C und 7 Tage bei 50 °C vorgetrocknet auf Aluminiumblech
(2) Gerät von Original Hanau Quarzlampen GmbH 0 = keine Verfärbung
5 = braun verfärbt
6 = dunkelbraun verfärbt
(3) Gerät von Original Hanau Quarzlampen GmbH, Hanau, Kurzbewitterung nach DIN 53 387, 3 Minuten Berieselung, 17 Minuten Trockenlauf, Kreidungsgrad nach DIN 53 223

## Ansprüche

1. Carboxylgruppenhaltige Vinylchloridcopolymerisate, die Vinylchlorid, Diester α, β-olefinisch ungesättigter Dicarbonsäuren mit Monoalkanolen und α, β-olefinisch ungesättigte, Carbonsäuren oder Dicarbonsäurehalbester einpolymerisiert enthalten, wobei die Copolymerisate

a) 65 bis 85 Gewichtsprozent Vinylchlorid,

b) 15 bis 35 Gewichtsprozent mindestens eines Diesters einer α, β-olefinisch ungesättigten Dicarbonsäure mit 1 bis 10 Kohlenstoffatome enthaltenden Monoalkanolen und

c) 0,3 bis 10 Gewichtsprozent mindestens einer copolymerisierbaren α, β-olefinisch ungesättigten Carbonsäure oder eines Halbesters einer α, β-olefinisch ungesättigten Dicarbonsäure mit 1 bis 18 Kohlenstoffatome enthaltenden Monoalkanolen,

mit der Maßgabe, daß die Summe der unter a) bis c) genannten Prozentzahlen gleich 100 ist, einpolymerisiert enthalten, und die Copolymerisate Säurezahlen zwischen 3 und 30 sowie K-Werte zwischen 40 und 60 aufweisen, dadurch gekennzeichnet, daß die Copolymerisate durch Emulsionspolymerisation in Gegenwart nichtionischer Emulgatoren und anschließende übliche Aufarbeitung durch Fällung und Trockung erhalten worden sind.

2. Carboxylgruppenhaltige Vinylchloridcopolymerisate nach Anspruch 1, dadurch gekennzeichnet, daß als nichtionischer Emulgator für die Emulsionspolymerisation ein Alkylphenolpolyalkylenoxidäther verwendet wird.

3. Carboxylgruppenhaltige Vinylchloridcopolymerisate nach Anspruch 1, dadurch gekennzeichnet, daß als nichtionischer Emulgator für die Emulsionspolymerisation Addukte von Äthylen- oder Propylenoxid an Fettalkohole, Fettamine, Fettsäuren oder Fettsäureamide verwendet werden.

4. Carboxylgruppenhaltige Vinylchloridpolymerisate nach einem der vorhergehenden Ansprüche, dadurch gekennzeichnet, daß für die Aufarbeitung der Emulsionspolymerisate Alkohole mit 1 bis 8 Kohlenstoffatomen als Fällungsmittel verwendet werden.

5. Carboxylgruppenhaltige Vinylchloridcopolymerisate nach einem der vorhergehenden Ansprüche, dadurch gekennzeichnet, daß das Polymerisat

70 bis 80 Gewichtsprozent Vinylchlorid,

20 bis 29 Gewichtsprozent Maleinsäuredibutylester oder Maleinsäurediisobutylester und

3 bis 8 Gewichtsprozent Maleinsäuremonobutylester oder Maleinsäuremonoisobutylester oder

1,5 bis 4 Gewichtsprozent Acrylsäure

einpolymerisiert enthält und eine Säurezahl zwischen 9 und 25 aufweist.

6. Carboxylgruppenhaltige Vinylchloridcopolymerisate nach Anspruch 2, dadurch gekennzeichnet, daß als nicht ionischer Emulgator ein Alkylphenolpolyalkylenoxidäther der allgemeinen Formel

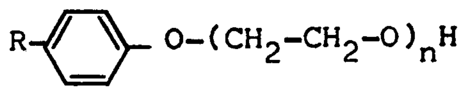

wobei R ein Alkylrest mit 6 bis 18 Kohlenstoffatomen und n = 5 bis 50 ist, verwendet wird.

7. Verwendung der carboxylgruppenhaltigen Vinylchloridcopolymerisate nach einem der vorhergehenden Ansprüche als Bindemittel für physikalisch aus organischer Lösung auftrockende Beschichtungsstoffe.

**Claims**

1. Carboxyl-containing vinyl chloride copolymers containing copolymerized units of vinyl chloride, diesters of α,β-olefinically unsaturated dicarboxylic acids with monoalkanols and α,β-olefinically unsaturated carboxylic acids or dicarboxylic acid monoesters, the copolymers containing

a) 65 to 85 % by weight of copolymerized units of vinyl chloride,

b) 15 to 35 % by weight of copolymerized units of at least one diester of an α,β-olefinically unsaturated dicarboxylic acid with monoalkanols of 1 to 10 carbon atoms, and

c) 0.3 to 10 % by weight of copolymerized units of at least one copolymerizable α,β-olefinically unsaturated carboxylic acid or of at least one monoester of an α,β-olefinically unsaturated dicarboxylic acid with monoalkanols of 1 to 18 carbon atoms

with the proviso that the sum of the percentages given in a), b) and c) is 100, and the copolymers having acid numbers of from 3 to 30 and K values of from 40 to 60, characterized in that the copolymers have been obtained by emulsion polymerization in the presence of nonionic emulsifiers and subsequent conventional working up by precipitation and drying.

2. Carboxyl-containing vinyl chloride copolymers as claimed in claim 1, characterized in that an alkylphenol polyalkylene oxide ether is used as nonionic emulsifier for the emulsion polymerization.

3. Carboxyl-containing vinyl chloride copolymers as claimed in claim 1, characterized in that an adduct of ethylene oxide or propylene oxide with a fatty alcohol, a fatty amine, a fatty acid or a fatty acid amide is used as nonionic emulsifier for the emulsion polymerization.

4. Carboxyl-containing vinyl chloride polymers as claimed in any one of the preceding claims, characterized in that an alcohol of 1 to 8 carbon atoms is used as precipitating agent for working up the emulsion polymers.

5. Carboxyl-containing vinyl chloride copolymers as claimed in any one of the preceding claims, characterized in that the polymer contains

70 to 80 % by weight of copolymerized units of vinyl chloride,

20 to 29 % by weight of copolymerized units of butyl maleate or diisobutyl maleate, and

3 to 8 % by weight of copolymerized units of monobutyl maleate or monoisobutyl maleate or

1.5 to 4 % by weight of copolymerized units of acrylic acid, and has an acid number of from 9 to 25.

6. Carboxyl-containing vinyl chloride copolymers as claimed in claim 2, characterized in that an alkylphenol polyalkylene oxide ether of the general formula

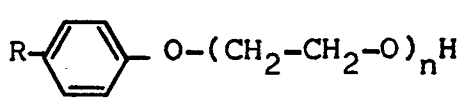

where R is alkyl of 6 to 18 carbon atoms and n is 5 to 50, is used as nonionic emulsifier.

7. Use of the carboxyl-containing vinyl chloride polymers as claimed in any one of the preceding claims as binders for coating materials drying physically from organic solution.

**Revendications**

1. Copolymérisats de chlorure de vinyle à groupes carboxyle, qui contiennent, en polymérisation, du chlorure de vinyle, des restes d'acides carboxyliques à insaturation oléfinique en α, β et de monoalcanols et des acides carboxyliques ou des hémi-esters d'acides carboxyliques à insaturation oléfinique en α, β, les copolymérisats contenant, en polymérisation,

a) 65 à 85 % en poids de chlorure de vinyle,

b) 15 à 35 % en poids d'au moins un diester d'un diacide carboxylique à insaturation oléfinique en α, β et de monoalcanol en $C_1$ à $C_{10}$,

c) 0,3 à 10 % en poids d'au moins un acide carboxylique à insaturation oléfinique en α, β, copolymérisable ou d'un hémi-ester d'un diacide carboxylique à insaturation oléfinique en α, β et de monoalcanol en $C_1$ à $C_{18}$ avec la condition que la somme des pourcentages indiqués sous a) à c) soit égale à 100 et que les copolymérisats possèdent des indices d'acide compris entre 3 et 30 et un indice K compris entre 40 et 60, caractérisés par le fait que les copolymérisats ont été obtenus par polymérisation en émulsion, en présence d'émulsifiants non ioniques et traitement usuel suivant par précipitation et séchage.

2. Copolymérisats de chlorure de vinyle à groupes carboxyle selon la revendication 1, caractérisés par le fait que l'on utilise, comme émulsifiant non ionique pour la polymérisation en émulsion, un éther-oxyde d'alkylphénolpolyalkylène.

3. Copolymérisats de chlorure de vinyle à groupes carboxyle selon la revendication 1, caractérisés par le fait que l'on utilise, comme émulsifiant non ionique pour la polymérisation en émulsion, des produits d'addition d'oxyde d'éthylène ou propylène sur des alcools gras, amines grasses, acides gras ou amides gras.

4. Copolymérisats de chlorure de vinyle à groupes carboxyle selon l'une des revendications précédentes, caractérisés par le fait que l'on utilise, pour le traitement des polymérisats en émulsion, comme précipitant, des alcools en $C_1$ à $C_8$.

5. Copolymérisats de chlorure de vinyle à groupes carboxyle selon l'une des revendications précédentes, caractérisés par le fait que le polymérisat contient, en polymérisation, 70 à 80 % en poids de chlorure de vinyle, 20 à 29 % en poids de maléate de dibutyle ou de maléate de diisobutyle, et 3 à 8 % en poids de maléate de monobutyle ou de maléate de monoisobutyle, ou 1,5 à 4 % en poids d'acide acrylique et un indice d'acide compris entre 9 et 25.

6. Copolymérisats de chlorure de vinyle à groupes carboxyle selon la revendication 2, caractérisés par le fait que l'on utilise, comme émulsifiant non ionique, un éther-oxyde d'alkylphénolpolyalkylène de formule générale

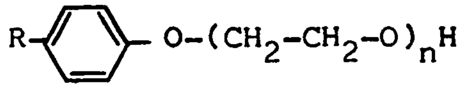

R étant un reste alkyle en $C_6$ à $C_{18}$ et n = 5 à 50.

7. Utilisation des copolymérisats de chlorure de vinyle à groupes carboxyle, selon l'une des revendications précédentes, comme liant pour matériau d'enduction séchant physiquement à partir de solution organique.